# EUROPEAN PATENT APPLICATION

(11) **EP 3 882 059 A1**
(43) Date of publication of application: **22.09.2021**
(21) Application number: 19885323.6
(22) Date of filing: 12.11.2019
(51) Int. Cl.: B60J 1/00, C03C 27/12, H05B 3/02, H05B 3/84

(54) **GLASS PLATE MODULE AND PRODUCTION METHOD FOR GLASS PLATE MODULE**

(30) Priority: 12.11.2018 JP 2018212583
(71) Applicant: NIPPON SHEET GLASS COMPANY, LIMITED, Tokyo 108-6321 (JP)
(72) Inventor: SAKAMOTO, Takumitsu, Tokyo 108-6321 (JP)
(74) Representative: Mewburn Ellis LLP
(86) International application number: PCT/JP2019/044333
(87) International publication number: WO 2020/100895

(57) **Abstract**

A glass plate module according to the present invention includes: a first glass plate having an edge portion on which a notch is formed; a second glass plate that is arranged opposing the first glass plate; an interlayer that is arranged between the first glass plate and the second glass plate; at least one conductive pattern that is arranged between the first glass plate and the second glass plate; at least one conductive cable that is connected to an end portion of the conductive pattern on an exposed surface that is exposed from the notch of the first glass plate on the second glass plate; a restriction member that engages with a portion of the conductive cable and restricts the conductive cable from separating from the exposed surface; and a sealing material that covers at least a connection portion at which the conductive cable and the conductive pattern are connected on the exposed surface.

## Description

### Technical Field

The present invention relates to a glass plate module and a method for manufacturing a glass plate module.

### Background Art

Patent Literature 1 discloses a windshield for an automobile provided with a deicer for thawing snow. In this windshield, a conductive cable for supplying electrical power to the deicer is connected using solder, and the connection portion is covered with a sealing material such as a urethane resin.

### Citation List

### Patent Literature

Patent Literature 1: JP 5917928B

### Summary of Invention

### Technical Problem

Incidentally, the above-described sealing material carries out a role of protecting the solder, which is the connection portion at which the deicer and the conductive cable are connected, with the sealing material, and carries out a role of fixing the conductive cable to the windshield as well. However, since the sealing material takes time to harden in some cases, there is a risk that the conductive cable will separate from the sealing material if the conductive cable is unintentionally pulled before hardening. Such a problem is a problem that is not limited to connection between a deicer and a conductive cable, and can occur in any connection to a conduction pattern arranged in a windshield.

The present invention was achieved in order to solve this problem, and aims to provide a glass plate module and a method for manufacturing the same, according to which it is possible to prevent a conductive cable from separating even if an external force acts before the sealing material hardens.

### Solution to Problem

A glass plate module according to the present invention includes: a first glass plate having an edge portion on which a notch is formed; a second glass plate that is arranged opposing the first glass plate; an interlayer that is arranged between the first glass plate and the second glass plate; at least one conductive pattern that is arranged between the first glass plate and the second glass plate; at least one conductive cable that is connected to an end portion of the conductive pattern on an exposed surface that is exposed from the notch of the first glass plate on the second glass plate; a restriction member that engages with a portion of the conductive cable and restricts the conductive cable from separating from the exposed surface; and a sealing material that covers at least a connection portion at which the conductive cable and the conductive pattern are connected on the exposed surface.

In the above-described glass plate module, the conductive cable can be configured to be fixed by the sealing material on the exposed surface.

In the above-described glass plate module, a spacer that is fixed to the exposed surface and is arranged along an edge portion of the second glass plate can be further included, and on the exposed surface, the sealing material can fill a region surrounded by the spacer and an end surface that extends along the notch of the first glass plate.

In the above-described glass plate module, the conductive cable can be configured to extend toward the spacer past a step between the exposed surface and the spacer.

In the above-described glass plate module, the restriction member can be attached to the spacer.

In the above-described glass plate module, the restriction member can include an engagement portion. For example, the engagement portion can include a first end portion and a second end portion, and can be formed such that at least one of the first end portion and the second end portion opposes the exposed surface. Also, the engagement portion can be configured to come into contact with an outer peripheral surface of the conductive cable between the first end portion and the second end portion.

In the above-described glass plate module, although there is no particular limitation on the configuration of the engagement portion, for example, the engagement portion can be formed into a U shape such that both the first end portion and the second end portion oppose the exposed surface.

In the above-described glass plate module, the conductive pattern and the conductive cable can be electrically connected to each other using lead-free solder.

A method for manufacturing a glass plate module according to the present invention includes: a step of preparing a glass assembly, which includes a first glass plate having an edge portion on which a notch is formed, a second glass plate that is arranged opposing the first glass plate, an interlayer that is arranged between the first glass plate and the second glass plate, and at least one conductive pattern that is arranged between the first glass plate and the second glass plate, an exposed surface that is exposed from the notch of the first glass plate being formed on the second glass plate; a step of electrically connecting a conductive cable to each conductive pattern on the exposed surface that is exposed from the notch of the first glass plate on the second glass plate of the glass assembly; a step of attaching a restriction member that restricts the conductive cable from separating from the exposed surface to a portion of the conductive cable; and a step of arranging a sealing material on the exposed surface so as to cover at least a connection portion at which the conductive cable and the conductive pattern are connected.

In the method for manufacturing the glass plate module, a step of arranging a spacer that extends along an edge portion of the second glass plate on the exposed surface before the step of arranging the sealing material can be further included, and the sealing material can be arranged on the exposed surface in a region surrounded by the spacer and an end surface that extends along the notch of the first glass plate.

In the method for manufacturing the glass plate module, a configuration can be used in which the restriction member is attached to the spacer, and the restriction member is attached along with the arrangement of the spacer.

### Advantageous Effects of Invention

According to the present invention, it is possible to prevent the conductive cable from separating even if an external force acts before the sealing material hardens.

### Brief Description of Drawings

FIG. 1 is a plan view from a vehicle interior, showing one embodiment in the case where a glass plate module according to the present invention is applied to a windshield.
FIG. 2 is a cross-sectional view taken along line A-A in FIG. 1.
FIG. 3 is a cross-sectional view taken along line B-B in FIG. 1.
FIG. 4 is a plan view showing a state in which a molded member has been removed in FIG. 1.
FIG. 5 is a perspective view showing a state in which a conductive cable is attached.
FIG. 6 is a front view showing another example of a restriction member.

### Description of Embodiments

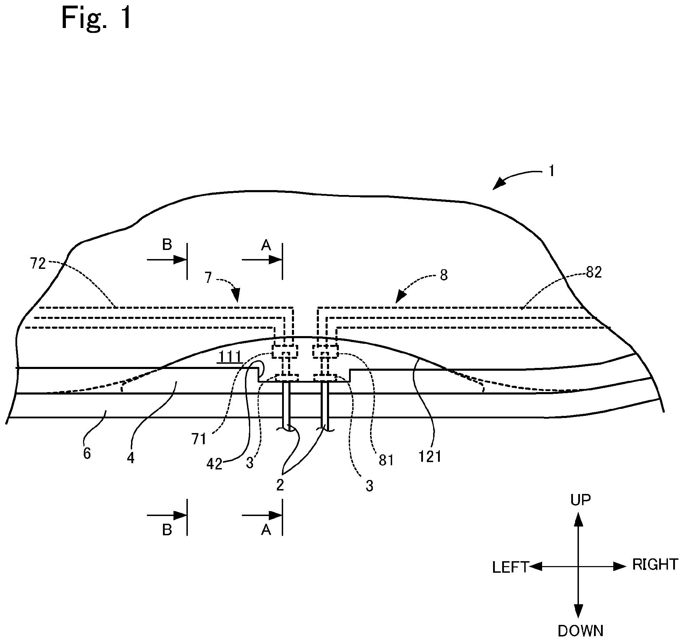

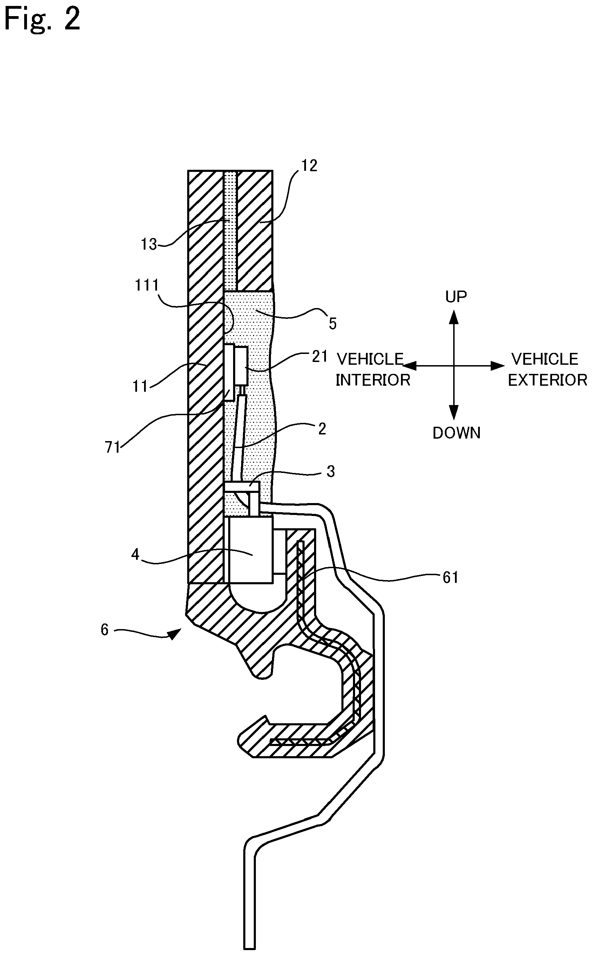

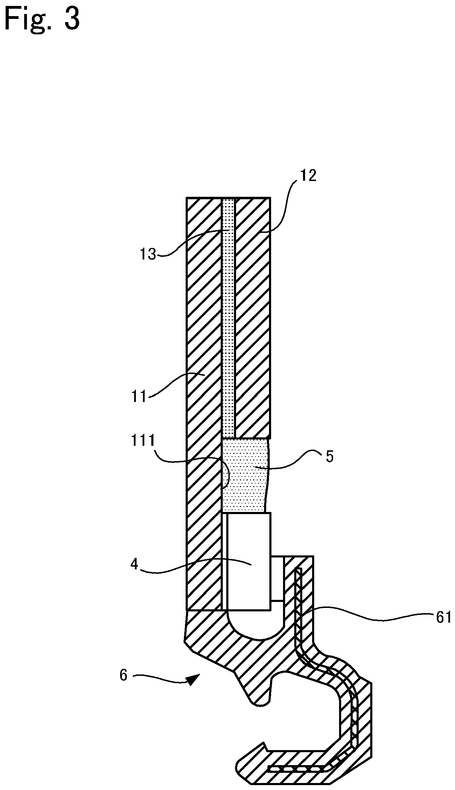

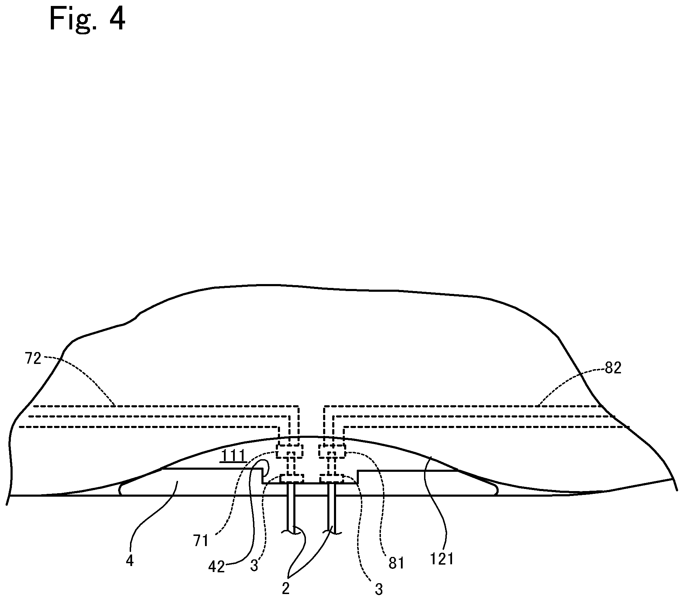

Hereinafter, an embodiment of a case in which the glass plate module according to the present invention is applied to a windshield of an automobile will be described with reference to the drawings. FIG. 1 is a plan view of a windshield according to the present embodiment from a vehicle interior side, FIG. 2 is a cross-sectional view taken along line A-A in FIG. 1, FIG. 3 is a cross-sectional view taken along line B-B in FIG. 1, and FIG. 4 is a plan view showing a state in which a molded member has been removed in FIG. 1. Note that hereinafter, description will be given in accordance with the direction shown in FIGS. 1 and 2, but the configuration of the present invention is not limited to this direction.

### 1. Overview of windshield

As shown in FIGS. 1 to 4, a windshield according to the present embodiment includes laminated glass 1 provided with a deicer for thawing snow. Also, conductive cables 2 are connected to the laminated glass 1, and the deicer is configured to generate heat due to electrical power supplied by the conductive cables 2 and thereby thaw snow. Also, restriction members 3, a spacer 4, and a sealing material 5 are provided in order to fix the conductive cables 2 to the laminated glass 1. Also, a molded member 6 is attached to a lower end portion of the laminated glass 1. Hereinafter, these members will be described in detail.

### 1-1. Laminated glass

The laminated glass 1 includes a rectangular outer glass plate 11, a rectangular inner glass plate 12 that opposes the outer glass plate 11, and an interlayer 13 that is arranged between the two glass plates 11 and 12. The two glass plates 11 and 12 have approximately the same shape. However, a circular arc-shaped notch 121 is formed on the lower side of the inner glass plate 12, and the outer glass plate 11 is exposed from this notch 121. That is, the interlayer 13 is not arranged at the portion at which the notch 121 is formed. Hereinafter, the portion that is exposed from the notch 121 on the outer glass plate 11 will be referred to as an exposed surface 111.

### 1-1-1. Glass plate

Known glass plates can be used as the outer glass plate 11 and the inner glass plate 12, and the outer glass plate 11 and the inner glass plate 12 can also be made of heat-ray absorbing glass, regular clear glass, green glass, heat-ray absorbing glass, UV green glass, or the like. However, the glass plates 11 and 12 need to attain a visible light transmittance that conforms to the safety standards of the country in which the automobile is to be used. For example, an adjustment can be made so that the outer glass plate 11 ensures a required solar absorptance and the inner glass plate 12 provides a visible light transmittance that meets the safety standards.

Although there is no particular limitation on the thickness of the laminated glass 1 according to the present embodiment, the sum of the thicknesses of the outer glass plate 11 and the inner glass plate 12 can be set to, for example, 2.1 to 6 mm, and from the viewpoint of reducing weight, the sum of the thicknesses of the outer glass plate 11 and the inner glass plate 12 is preferably set to 2.4 to 5.5 mm, is more preferably set to 2.6 to 5.2 mm, and is particularly preferably set to 2.7 to 5.0 mm.

The outer glass plate 11 is mainly required to have durability and impact resistance with respect to external hindrances, and for example, when this laminated glass is used as a windshield of an automobile, an impact-resistance performance with respect to flying objects such as small stones is required. On the other hand, the greater the thickness is, the greater the weight is, which is not preferable. From this viewpoint, the thickness of the outer glass plate 11 is preferably 1.6 to 3.0 mm, and more preferably 1.9 to 2.8 mm.

Although the thickness of the inner glass plate 12 can be made equal to that of the outer glass plate 11, the thickness can be made smaller than that of the outer glass plate 11, for example, in order to reduce the weight of the laminated glass. Specifically, considering the strength of the glass, the thickness is preferably 0.6 to 3.0 mm, preferably 0.8 to 2.8 mm, and particularly preferably 0.9 to 2.6 mm. The thickness is even more preferably 1.0 to 2.5 mm.

Also, although the laminated glass 1 is commonly curved so as to be convex on the vehicle exterior side, the positions at which the thickness is measured in such a case are two upper and lower positions on a central line S that extends in the up-down direction in the center in the left-right direction of the laminated glass 1. Although there is no particular limitation to the measurement device, for example, a thickness gauge such as SM-112 manufactured by Teclock Corporation can be used. During measurement, the curved surface of the laminated glass 1 is arranged on a flat surface, and measurement is performed with the end portion of the laminated glass 1 sandwiched by the above-described thickness gauge. Note that even if the glass plate is flat, it is possible to perform measurement similarly to the case in which the glass plate is curved.

### 1-1-2. Interlayer

The interlayer 13 is made of at least one layer, and as one example, the interlayer 13 can be constituted by three layers obtained by sandwiching a soft core layer between outer layers that are harder therethan. However, there is no limitation to this configuration, and it is sufficient that the interlayer 13 is made of multiple layers including a core layer and at least one outer layer that is arranged on the outer glass plate 11 side.

As a specific material, for example, the outer layer can be constituted by polyvinyl butyral resin (PVB). Polyvinyl butyral resin has excellent adhesiveness with glass plates and excellent penetration resistance, and is therefore preferable. On the other hand, for example, the core layer can be constituted by ethylene vinyl acetate resin (EVA), or polyvinyl acetal resin that is softer than the polyvinyl butyral resin constituting the outer layer. Due to the soft core layer being sandwiched therebetween, it is possible to significantly improve the soundproofing performance while maintaining adhesiveness and penetration resistance that are the same as those of the single-layer resin interlayer.

The total thickness of the interlayer 13 is not particularly specified, but is preferably 0.2 to 3.0 mm, more preferably 0.25 to 2.8 mm, and particularly preferably 0.3 to 2.5 mm. Also, the thickness of the core layer is preferably 0.03 to 1.0 mm and more preferably 0.05 to 0.6 mm. Also, the thickness of each outer layer is preferably 0.05 to 2.0 mm and more preferably 0.08 to 1.0 mm. Alternatively, it is also possible to make the total thickness of the interlayer 13 constant and adjust the thickness of the core layer therein.

The thicknesses of the core layer and the outer layer can be measured as follows, for example. First, a cross-section of laminated glass is displayed enlarged 175-fold using a microscope (e.g., VH-5500 manufactured by Keyence Corporation) . Then, the thicknesses of the core layer and the outer layer are visually identified and measured. At this time, in order to remove variation resulting from eyesight, measurement is performed 5 times, and the average value is taken as the thickness of the core layer and the outer layer. For example, an enlarged photograph of a cross-section of the laminated glass is taken, and the thickness is measured by specifying the core layer and the outer layer in the photograph.

Note that the thicknesses of the core layer and the outer layer of the interlayer 13 do not need to be constant over the entire surface, and for example, it is also possible to form them into a wedge shape for use in laminated glass to be used in a head-up display. In this case, the thicknesses of the core layer and the outer layer of the interlayer 13 are measured at the thinnest location, that is, the portion on the lowermost side of the laminated glass. If the interlayer 13 is wedge-shaped, the outer glass plate and the inner glass plate are not arranged in parallel, but it is assumed that such an arrangement is included in the glass plate of the present invention as well. That is, for example, the arrangement of the outer glass plate and the inner glass plate used when using an interlayer 13 that uses a core layer and an outer layer whose thicknesses increase with a change rate of 3 mm or less per meter is included in the present invention. Note that laminated glass in which not the interlayer 13 but, for example, at least one of the outer glass plate 11 and the inner glass plate 12 is wedge-shaped can also be used as the laminated glass for use in a head-up display.

### 1-2. Deicer

As shown in FIG. 1, the above-described deicer includes conductive patterns 7 and 8 that are formed by printing a conductive material such as silver paste on the surface on the vehicle interior side of the outer glass plate and baking the printed conductive material. Although various configurations are possible, in the present embodiment, the conductive pattern includes two conductive patterns arranged side by side in the left-right direction, that is, a first conductive pattern 7 and a second conductive pattern 8. Since these conductive patterns 7 and 8 are laterally symmetrical, the first conductive pattern 7 arranged on the left side will be described hereinafter. The first conductive pattern 7 includes a rectangular power supply portion 71 that is arranged on the exposed surface 111, and multiple wire materials 72 that are formed into an L shape that extends upward from the power supply portion 71, further bends toward the left, and extends along the lower side of the outer glass plate 11. The multiple wire materials 72 extend approximately in parallel. Also, the power supply portions 71 and 81 of the first conductive pattern 7 and the second conductive pattern 8 are arranged side by side in the left-right direction near the center of the notch 121.

Then, as shown in FIGS. 2 and 3, the conductive cable 2 is fixed to the power supply portions 71 and 81 by lead-free solder 21. Although various types of lead-free solder 21 can be used, for example, lead-free solder 21 with an Sn content of 90 wt% or more can be used. Alternatively, it is also possible to use lead-free solder 21 that contains In and Bi as main components. The conductive cable 2 fixed by the lead-free solder 21 extends toward the lower portion of the windshield and is connected to a power source (not shown) of the automobile.

### 1-3. Restriction members, spacer, and sealing material

As shown in FIGS. 1 to 4, a band-shaped spacer 4 that extends along the lower side of the outer glass plate 11 is fixed to the above-described exposed surface 111. Both end portions of the spacer 4 are connected to the end surface of the notch 121. This spacer 4 is made of a resin material and the like, and is fixed to the exposed surface 111 with adhesive, double-sided tape, or the like. Also, a rectangular recess 42 is formed at the portion opposing the power supply portions 71 and 81 on the upper end of the spacer 4. This makes it possible to increase the surface area near the center of the exposed surface 111.

As shown in FIG. 2, since the spacer 4 has a predetermined thickness, which is a thickness that is approximately the same as that of the inner glass plate 12, the spacer 4 is formed such that both end portions of the spacer 4 and the inner glass plate 12 are approximately level with each other. Also, the conductive cables 2 extend along the exposed surface 111 from the power supply portions 71 and 81 and extend downward past the spacer 4.

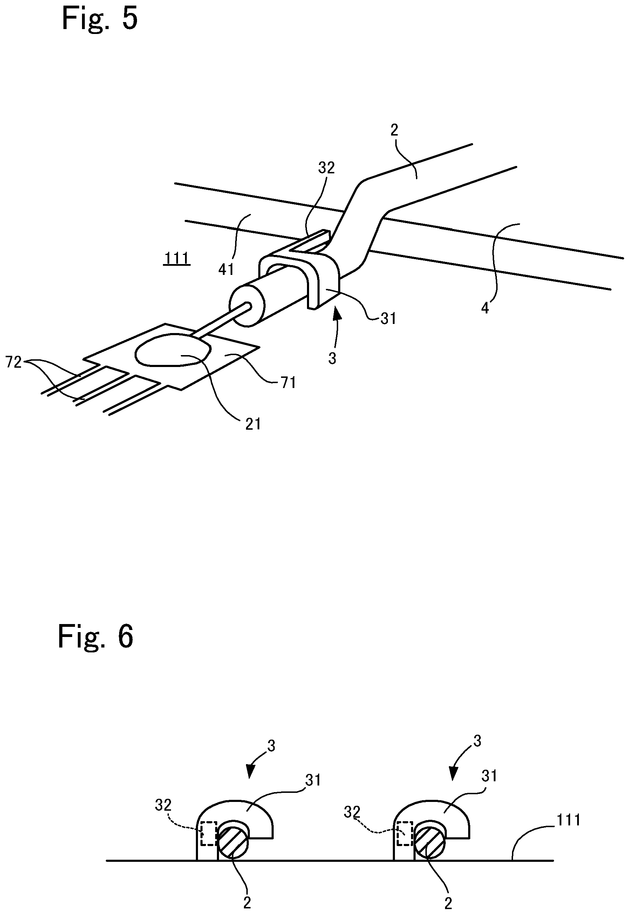

Also, the restriction members 3 that restrict the conductive cables 2 from separating from the exposed surface 111 are attached to the spacer 4. As shown in FIG. 5, the restriction member 3 includes an engagement portion 31 that is formed into a U shape that surrounds the outer peripheral surface of the conductive cable 2, and a joining portion 32 that joins the engagement portion 31 and the spacer 4. Both ends of the engagement portion 31 are configured to come into contact with the exposed surface 111, and the joining portion 32 is joined to an end surface 41 facing toward the notch 121 in the spacer 4. Accordingly, the conductive cable 2 is indirectly fixed to the spacer 4 by the restriction member 3 so as not to separate from the exposed surface 111. Note that both end portions of the engagement portion 31 formed into a U shape correspond to the first end portion and the second end portion of the present invention. In this example, both the first end portion and the second end portion of the engagement portion 31 are arranged so as to oppose the exposed surface 111.

Also, as shown in FIGS. 2 and 3, on the exposed surface 111, the sealing material 5 fills the region surrounded by the spacer 4 and the end surface of the notch 121 on the inner glass plate 12. For example, a known sealing material such as a urethane resin, a silicone resin, or an epoxy resin can be used as the sealing material 5. Since filling is performed with the sealing material 5 at a thickness that is approximately the same as the inner glass plate 12, the surfaces of the sealing material 5, the inner glass plate 12, and the spacer 4 are approximately level. Also, since the exposed surface 111 is covered by the sealing material 5, the conductive patterns 7 and 8 arranged on the exposed surface 111, the lead-free solder 21, the conductive cables 2, and the restriction member 3 are fixed by being covered by the sealing material 5.

### 1-4. Molded member

The molded member 6 is a member that is provided along the lower side of the windshield, and is for fixing the windshield to the vehicle interior and preventing the entrance of moisture from the vehicle exterior. Specifically, as shown in FIGS. 1 to 3, the molded member 6 is a resin member that is insert-molded so as to enclose an insert material 61. For example, the resin that is to be used in the molded member 6 may be a thermoplastic elastomer such as an olefin-based elastomer such as polyvinyl chloride, a styrene-based elastomer, ethylene-propylene-diene rubber (EPDM), or the like, and specifically, polyphenylene oxide (PPO) is suitable thereas. The insert material 61 may be an elastically deformable metal piece, and an aluminum metal piece is suitable thereas.

There is no particular limitation on the shape of the molded member 6, and although the molded member 6 is attached to the windshield so as to sandwich the surface of the spacer 4 and the end surface on the lower side of the outer glass plate 11 in the examples shown in FIGS. 1 to 3, another attachment method may also be employed.

### 2. Method for manufacturing windshield

Next, one example of a method for manufacturing a windshield configured as described above will be described. First, a method for manufacturing the laminated glass 1 will be described.

### 2-1. Method for manufacturing laminated glass

First, the notch 121 is formed on the flat plate-shaped inner glass plate 12. Next, a material for use in a conductive pattern is printed on the surface on the vehicle interior side of the outer glass plate 11 through printing, and thereafter, the conductive patterns 7 and 8 are fixed to the outer glass plate 11 by baking the material. Next, the outer glass plate 11 and the inner glass plate 12 are molded into curved shapes. There is no particular limitation on the method of molding, and a known method can be employed. For example, a flat plate-shaped glass plate passes through a heating furnace, and can thereafter be molded into a curved shape by being pressed by an upper mold and a lower mold. Alternatively, the flat plate-shaped outer glass plate and inner glass plate are overlaid on each other, arranged on a frame-shaped mold, and passed through a heating furnace. Accordingly, both glass plates are softened, and are molded into curved shapes by their own weight.

After the outer glass plate 11 and the inner glass plate 12 are molded into curved shapes in this manner, the interlayer 13 is sandwiched between the outer glass plate 11 and the inner glass plate 12, and these are placed in a rubber bag, and preliminarily bonded together at about 70 to 110°C under vacuum suction. Preliminary bonding can be performed using a method other than this method. For example, the interlayer 13 is sandwiched between the outer glass plate 11 and the inner glass plate 12 and heated at 45 to 65°C using an oven. Next, the laminated glass is pressed by a roller at 0.45 to 0.55 MPa. Next, the laminated glass is heated again using an oven at 80 to 105°C, and thereafter is again pressed by a roller at 0.45 to 0.55 MPa. Thus, preliminary bonding is finished.

Next, permanent bonding is performed. The laminated glass subjected to preliminary bonding is subjected to permanent bonding using an autoclave at, for example, 8 to 15 atmospheres and 100 to 150°C. Specifically, for example, permanent bonding can be performed under the conditions of 14 atmospheres and 145°C. Thus, the laminated glass 1 according to the present embodiment is manufactured.

### 2-2. Attachment of conductive cable

Next, the conductive cables 2 are connected to the power supply portions 71 and 81 arranged on the exposed surface 111 using the lead-free solder 21. Then, the spacer 4 to which the restriction members 3 have been attached is fixed to the exposed surface 111. At this time, the positions of the conductive cables 2 are adjusted such that the engagement portions 31 of the restriction members 3 engage with the conductive cables 2. Also, the conductive cables 2 extend past the spacer 4 toward the lower portion of the windshield. Thereafter, filling with the sealing material 5 is performed so as to cover the conductive patterns 7 and 8, the lead-free solder 21, the conductive cables 2, and the restriction members 3, which are arranged on the exposed surface 111. Finally, when the molded member 6 is attached to the lower side of the laminated glass 1, the windshield according to the present embodiment is complete.

### 3. Characteristics

As described above, according to the present embodiment, it is possible to obtain the following effects.
(1) Although the conductive cables 2 are fixed to the power supply portions 71 and 81 using the lead-free solder 21, for example, the lead-free solder 21 is harder compared to leaded solder, and therefore there is a risk that a crack will occur when pulled unintentionally. Also, depending on the sealing material 5, it takes several days to several weeks to completely harden in some cases, and therefore the glass plate module needs to be handled in a state in which the fixing of the conductive cables 2 by the sealing material 5 is insufficient before the sealing material 5 hardens. There is also a risk that the conductive cables 2 will separate from the sealing material 5 if pulled during this time. In contrast to this, in the present embodiment, the restriction members 3 are attached to the spacer 4 fixed strongly by adhesive or double-sided tape, and the conductive cables 2 are engaged with the restriction members 3. Accordingly, the conductive cables 2 are indirectly fixed to the spacer 4, and the conductive cables 2 are prevented from separating from the exposed surface 111.

Accordingly, it is possible to prevent the conductive cables 2 from separating from the sealing material 5 even if the conductive cables 2 are pulled before the sealing material 5 hardens. Also, since it is possible to suppress a case in which a force acts also on the connection portions at which the supply portions 71 and 81 and the conductive cables 2 are connected, which are fixed by the lead-free solder 21, it is possible to prevent the lead-free solder 21 from being damaged even if the conductive cables 2 are pulled. Note that since the conductive cables 2 are covered by the sealing material 5 on the exposed surface 111, when the sealing material 5 hardens, the conductive cables 2 are firmly fixed on the exposed surface 111.

Note that depending on the material, there is a risk that even if the sealing material 5 is an elastic material, the shape will not be able to return in response to a strong deformation. Also, even after hardening, there is a possibility that the sealing material 5 will soften due to being in a high-temperature environment resulting from solar radiation and the outside air temperature, or due to heat from a terminal resulting from electrical conduction. Accordingly, even after hardening, there is a risk that an inconvenience will occur, such as the sealing material 5 deforming so as not to be able to return due to a strong force being applied to the conductive cables 2, peeling occurring due to the sealing material 5 deforming when the conductive cables 2 are pulled at a high temperature, or the conductive cables 2 coming off of the power supply portion 71. Accordingly, if the restriction member 3 has been provided as in the present embodiment, the load on the sealing material 5 and the lead-free solder 21 can be mitigated, and these inconveniences can be prevented.

(2) In particular, in the present embodiment, the conductive cables 2 extend downward from the exposed surface 111 past the spacer 4, and therefore the conductive cables 2 are guided in a direction of separating from the exposed surface 111 by the spacer 4. Accordingly, a force is likely to act on the conductive cables 2 in the direction of separating from the exposed surface 111. For this reason, if the restriction members 3 are provided as described above, the movement of the conductive cables 2 is restricted, which is particularly advantageous.

### 4. Variations

Although an embodiment of the present invention has been described above, the present invention is not limited to the above-described embodiment, and various modifications are possible without departing from the gist of the invention. Also, the multiple variations described hereinafter can be combined as appropriate.

### <4-1>

There is no particular limitation to the configuration of the restriction members 3, and it is sufficient that the restriction members 3 are configured to be fixed to the spacer 4 and to suppress a case in which the conductive cables 2 separate from the exposed surface 111. For example, as shown in FIG. 6, it is also possible to use restriction members 3 that have engagement portions 31 formed into J shapes. That is, one end portion of each engagement portion 31 may be located away from the exposed surface 111, or the engagement portion 31 may be L-shaped. For example, if the engagement portion 31 is L-shaped, one of the two end portions (the first end portion and the second end portion) thereof is arranged so as to oppose the exposed surface 111. In this manner, the engagement portion of the restriction member 3 need only be provided with at least a first portion that opposes the exposed surface 111, and as long as the conductive cable 2 is arranged between the first portion and the exposed surface 111, it is possible to suppress a case in which the conductive cable 2 separates from the exposed surface 111. In addition to this, if at least one or more second portions that extend approximately orthogonally to the exposed surface 111 are provided, the second portions can suppress a case in which the conductive cables 2 move in the surface direction of the exposed surface 111. If the engagement portion is formed into a U shape, two second portions are provided, and if the conductive cable 2 is arranged between these two second portions, it is possible to prevent the conductive cable 2 from moving in the surface direction of the exposed surface 111. Note that the restriction member 3 can be made of various materials, such as metal materials and resin materials. Also, instead of assembling the restriction member 3 and the spacer 4, which are separate members, the restriction member 3 and the spacer 4 can also be formed as a component in one piece, so as to be molded in one piece using resin or the like.

Alternatively, it is also possible to directly fix the restriction member 3 to the exposed surface 111 without providing the restriction member 3 on the spacer 4. For example, a restriction member 3 that is U-shaped, J-shaped, L-shaped, or the like can be engaged with the conductive cable 2 and fixed to the exposed surface 111 with adhesive, double-sided tape, or the like. It is also possible to form the restriction member 3 with tape or the like and fix the conductive cable 2 to the exposed surface 111.

### <4-2>

In the above-described embodiment, the recess 42 was provided in the spacer 4, but this is one example of a mode of the spacer 4, and it is possible to use various shapes, such as an inner spacer of a recess. Note that the spacer 4 is not necessarily needed. In this case, it is sufficient that the sealing material 5 is prevented from protruding excessively from the exposed surface 111. Also, the sealing material 5 need not fill the entirety of the exposed surface 111, and for example, may be arranged so as to cover the conductive cable 2 only at the location at which the conductive cable 2 has been arranged.

### <4-3>

In the above-described embodiment, the conductive patterns 7 and 8 for the deicer were provided on the windshield, but there is no particular limitation to the number and shape of the conductive patterns 7 and 8. Accordingly, there is no particular limitation to the configurations of the above-described wire materials 72 and 82 and the power supply portions 71 and 81, and it is sufficient to use a configuration in which the location of any of the conductive patterns 7 and 8 can be connected to the conductive cables 2 on the exposed surface 111.

Also, as long as electrical power can be supplied by the conductive cable 2, application of the conductive pattern is not limited to a deicer. For example, it is also possible to use a conductive pattern that is to be used in an antenna, a heating wire for preventing fogging, and the like.

Also, in the above-described embodiment, the conductive patterns 7 and 8 were formed on the outer glass plate 11 through printing, but they can also be formed on the inner glass plate 12. Alternatively, the conductive patterns 7 and 8 may also be formed on the interlayer 13. In this case, the conductive patterns 7 and 8 are formed on one of the layers forming the interlayer 13. For example, the interlayer 13 obtained by sandwiching a resin layer on which the conductive patterns 7 and 8 have been formed between other resin layers can also be provided.

### <4-4>

In the above-described embodiment, the conductive cables 2 and the conductive patterns 7 and 8 are electrically connected to each other by the lead-free solder 21, but there is no limitation to this, and it is possible to employ leaded solder or the like, as long as it can electrically connect the conductive cables 2 and the conductive patterns 7 and 8.

### <4-5>

There is also no particular limitation to the configuration of the laminated glass 1. In the above-described embodiment, the circular arc-shaped notch 121 is formed, but there is no particular limitation to the shape of the notch 121, and it is sufficient to use a shape in which a portion of the outer glass plate 11 appears as the exposed surface 111 on which the conductive cable 2 can be connected. Also, the notch 121 need not be obtained by removing a portion of the inner glass plate 12, and for example, it is sufficient that the inner glass plate 12 is formed smaller than the outer glass plate 11, and a portion of the outer glass plate 11 is exposed. In this case, a portion extending along the exposed surface 111 on the inner glass plate 12 is a notch of the present invention.

In the above-described embodiment, the notch 121 was provided on the inner glass plate 12 and the exposed surface 111 was provided on the outer glass plate 11, but the inverse of this may also be employed.

A mask layer can also be provided on at least one glass plate as needed. A mask layer can be formed on the peripheral edge of the glass plate using ceramics or the like, and thus the field of view from the vehicle exterior or the vehicle interior is blocked.

The molded member 6 need only be provided as needed according to the specification of the automobile, and it is also possible to use a windshield that does not include a molded member.

### <4-6>

In the above-described embodiment, an example was shown in which the glass plate module of the present invention was applied to the windshield, but it is also possible to apply the glass plate module of the present invention to a rear glass, a side glass, or the like. For example, if the glass plate module of the present invention is applied to a rear glass, the conductive pattern can be for a defogger or an antenna.

### List of Reference Numerals

- 1: Laminated glass (glass assembly)
- 11: Outer glass plate (first glass plate)
- 12: Inner glass plate (second glass plate)
- 13: Interlayer
- 2: Conductive cable
- 3: Restriction member
- 4: Spacer
- 5: Sealing material
- 7: First conductive pattern
- 8: Second conductive pattern

## Claims

1. A glass plate module comprising:
a first glass plate having an edge portion on which a notch is formed;
a second glass plate that is arranged opposing the first glass plate;
an interlayer that is arranged between the first glass plate and the second glass plate;
at least one conductive pattern that is arranged between the first glass plate and the second glass plate;
at least one conductive cable that is connected to the conductive pattern on an exposed surface that is exposed from the notch of the first glass plate on the second glass plate;
a restriction member that engages with a portion of the conductive cable and restricts the conductive cable from separating from the exposed surface; and
a sealing material that covers at least a connection portion at which the conductive cable and the conductive pattern are connected on the exposed surface.

2. The glass plate module according to claim 1, wherein the conductive cable is fixed by the sealing material on the exposed surface.

3. The glass plate module according to claim 1 or 2, further comprising
a spacer that is fixed to the exposed surface and is arranged along an edge portion of the second glass plate,
wherein on the exposed surface, the sealing material fills a region surrounded by the spacer and an end surface that extends along the notch of the first glass plate.

4. The glass plate module according to claim 3, wherein the conductive cable is configured to extend toward the spacer past a step between the exposed surface and the spacer.

5. The glass plate module according to claim 3 or 4, wherein the restriction member is attached to the spacer.

6. The glass plate module according to any one of claims 1 to 5,
wherein the restriction member includes an engagement portion,
the engagement portion includes a first end portion and a second end portion, and is formed such that at least one of the first end portion and the second end portion opposes the exposed surface, and
the engagement portion is configured to come into contact with an outer peripheral surface of the conductive cable between the first end portion and the second end portion.

7. The glass plate module according to claim 6, wherein the engagement portion is formed into a U shape such that both the first end portion and the second end portion oppose the exposed surface.

8. The glass plate module according to any one of claims 1 to 7, wherein the conductive pattern and the conductive cable are electrically connected to each other using lead-free solder.

9. A method for manufacturing a glass plate module, the method comprising:
a step of preparing a glass assembly, which includes a first glass plate having an edge portion on which a notch is formed, a second glass plate that is arranged opposing the first glass plate, an interlayer that is arranged between the first glass plate and the second glass plate, and at least one conductive pattern that is arranged between the first glass plate and the second glass plate, an exposed surface that is exposed from the notch of the first glass plate being formed on the second glass plate;
a step of electrically connecting a conductive cable to each conductive pattern on the exposed surface;
a step of attaching a restriction member that restricts the conductive cable from separating from the exposed surface to a portion of the conductive cable; and
a step of arranging a sealing material on the exposed surface so as to cover at least a connection portion at which the conductive cable and the conductive pattern are connected.

10. The method for manufacturing a glass plate module according to claim 9, further comprising
a step of arranging a spacer that extends along an edge portion of the second glass plate on the exposed surface before the step of arranging the sealing material,
wherein the sealing material is arranged on the exposed surface in a region surrounded by the spacer and an end surface that extends along the notch of the first glass plate.

11. The method for manufacturing a glass plate module according to claim 10,
wherein the restriction member is attached to the spacer, and
the restriction member is attached along with the arrangement of the spacer.
